(19) Europäisches Patentamt
European Patent Office
Office européen des brevets

(11) Veröffentlichungsnummer: **0 547 519 A1**

(12) **EUROPÄISCHE PATENTANMELDUNG**

(21) Anmeldenummer: **92121135.5**

(51) Int. Cl.5: **C08F 220/06**, C08F 2/14

(22) Anmeldetag: **11.12.92**

(30) Priorität: **18.12.91 DE 4141693**

(43) Veröffentlichungstag der Anmeldung:
**23.06.93 Patentblatt 93/25**

(84) Benannte Vertragsstaaten:
**AT BE CH DE DK ES FR GB IT LI NL SE**

(71) Anmelder: **RÖHM GMBH**
**Kirschenallee**
**W-6100 Darmstadt(DE)**

(72) Erfinder: **Göldner, Ernst, Dr.**
**Hauffstrasse 2**
**W-7940 Riedlingen(DE)**
Erfinder: **Haas, Martina**
**Uhlandstrasse 10**
**W-6103 Griesheim(DE)**

(54) **Verfahren zur Herstellung einer wasserlöslichen Polymersuspension.**

(57) Die Erfindung betrifft ein Verfahren zur Herstellung eines sich schnell in Wasser lösenden Polymerisates in Form einer Suspension auf Basis eines schwach vernetzten Polymerisats, aufgebaut aus 30 bis 99,99 Gew.-% Einheiten von Alkali-, Amin- oder bevorzugt Ammoniumsalzen der (Meth)acrylsäure, die gegebenenfalls teilweise durch Einheiten freier (Meth)acrylsäure ersetzt sein können, und 0,01 bis 5 Gew.-% vernetzenden Monomereinheiten und gegebenenfalls bis zu 69,99 Gew.-% Einheiten hydrophiler oder auch hydrophober Comonomerer, in Oligoalkylenglykolverbindungen als kontinuierlicher Phase. Das Verdickungsmittel ergibt in Wasser hochviskose, kurz abreißende mikrogelartige Lösungen.
Die erfindungsgemäß hergestellte Suspension mit über 12 Gew.-% Polymerisatgehalt ist langzeitlagerstabil. Sie findet beispielsweise als Verdickungsmittel von Wasser und wäßrigen Systemen Verwendung.

EP 0 547 519 A1

## Gebiet der Erfindung

Die Erfindung betrifft ein vereinfachtes Verfahren zur Herstellung einer Suspension von wasserlöslichen Vinylpolymeren und deren Verwendung als Verdickungsmittel.

## Stand der Technik

Suspensionen von wasserlöslichen oder wasserquellbaren Vinylpolymeren mit hoher Wasseraufnahmefähigkeit, das sind Polymere, die als Verdickungsmittel wirken, sind bekannt.

Die EP 0 297 184 beschreibt ionische Harzemulsionen mit hoher Wasseraufnahmefähigkeit, die durch UmkehrphasenEmulsionspolymerisation der wäßrigen Lösung der ionischen Monomeren - insbesondere von (Meth)acrylverbindungen - mit 0,01 bis 0,5 Mol.-% einer Divinylverbindung, wie z.B. Methylenbisacrylamid oder Allylacrylamid in einem Öl in Gegenwart eines öllöslichen Radikalbildners, wie Azobisisobutyronitril, hergestellt werden.

In der DE-OS 24 51 599 ist ein Verfahren zur Herstellung von fluiden, wasserdispergierbaren Suspensionen aus trockenen Teilchen von wasserlöslichen oder wasserquellbaren Vinylpolymeren in flüssigem Polyglykol oder einem flüssigen Polyglykolether beschrieben. Die Polymeren sind gesondert durch Polymerisation von geeigneten wasserlöslichen Vinylmonomeren, z.B. Natriumacrylat, in einer Wasser-in-Öl-(W/O)-Emulsion hergestellt, aus der das Wasser anschließend azeotrop mit dem Öl - Kohlenwasserstoffe, wie z.B. Xylol oder halogenierte Kohlenwasserstoffe - abdestilliert wird, wonach die flüssigen Polyglykole bzw. Polyglykolether zugegeben werden. In Gegenwart von Vernetzungsmitteln, wie vorzugsweise Methylenbisacrylamid, aber auch Allylacrylat, werden bei der Polymerisation wasserquellbare Polymere erhalten.

Aus der EP 0 097 808 ist ein wasserlösliches Verdickungsmittel in Suspensionsform bekannt, das im wesentlichen ein Copolymerisat eines Alkali- oder Ammoniumsalzes der Acryl- oder Methacrylsäure mit einem vernetzenden Monomeren mit wenigstens zwei polymerisierbaren Doppelbindungen ist. Das Polymerisat wird aus einer im wesentlichen wasserfreien Lösung der Monomeren in einem niederen aliphatischen Alkohol, bevorzugt Ethanol, als Fällungspolymerisat hergestellt und anschließend durch Vermischen mit Wasser in die Alkoholhaltige Suspension übergeführt. Der Polymerisatgehalt dieser Suspensionen liegt zwischen 7 und 12 Gew.-%, nach dem Beispiel (Beispiel 5) bei 8 Gew.-%, wobei die erreichte Stabilität der Suspension nur befriedigend war.

## Aufgabe und Lösung

Es bestand die Aufgabe ein Verdickungsmittel auf der Basis eines Polymerisats der (Meth)acrylsäure als lagerstabile Verdickungsmittel-Suspension mit hohem Wirkstoffgehalt in einem Lösungsmittel, das biologisch unbedenklich ist und einen Flammpunkt von über 130 Grad C besitzt, zur Verfügung zu stellen und ein einfaches Herstellungsverfahren für eine solche Suspension zu finden.

Es wurde gefunden, daß sich eine wasserfreie Suspension von schwach vernetzten Polymerisaten von Alkali- oder Ammoniumsalzen und auch von Salzen organischer Amine der Acrylsäure oder Methacrylsäure in einem hydrophilen Lösungsmittel auf Oligoalkylenglykol-Basis herstellen läßt, die bei relativ hohem Polymeranteil Langzeitlagerstabil ist und deren Polymerisat als Wirkstoff eine gute Wirkung als Verdickungsmittel entfaltet. Die Herstellung dieser Suspension läßt sich überraschenderweise in einem einstufigen Verfahren durchführen. Die Polymersuspension ist praktisch wasserfrei. Sie wird in einem wasserfreien Verfahren hergestellt und der Polymerisatgehalt liegt über 12 Gew.-%, vor allem über 13 Gew.-%, bevorzugt zwischen 15 und 30 Gew.-%.

Die Erfindung betrifft ein Verfahren zur Herstellung einer wasserfreien Suspension eines wasserlöslichen Polymeren auf Basis eines schwach vernetzten Polymerisats der (Meth)acrylsäure,

dadurch gekennzeichnet,

daß ein Polymerisat in Suspensionsform,an dessen Aufbau

a) 30 bis 99,99 Gew.-% eines Alkali-, Ammonium- und/oder organischen Aminsalzes der Acryl- und/oder Methacrylsäure, die bis zur Hälfte des Gewichtes dieser Komponente durch Einheiten freier (Meth)-acrylsäure ersetzt sein können,

b) 0,01 bis 5, vorzugsweise 0,5 bis 2 Gew.-% Einheiten eines vernetzenden Monomeren mit mindestens zwei polymerisierbaren Doppelbindungen und

c) 0 bis 69,99 Gew.-% eines oder mehrerer weiterer überwiegend stark hydrophiler, nichtionischer Comonomerer

beteiligt sind,

durch Polymerisation in Oligoalkylenoxidverbindungen der Formel I

$$H -(- O - \overset{R}{\overset{|}{C}}H - CH_2 -)_n \; OR_1 \qquad I$$

mit

R = H, $CH_3$

$R_1$ = H, $CH_3$, $C_2H_5$

n = 2, 3, 4

hergestellt wird.

Erfindungsgemäß bevorzugt werden Polymersuspensionen durch Polymerisation von Ammonium(meth)-acrylat und Allylmethacrylat bzw. N-Allylmethacrylamid als Vernetzer in Tripropylenglykol hergestellt. Die Salzbildung wird bevorzugt durch Umsetzung der in der Oligoalkylenoxidverbindung der Formel I gelösten (Meth)acrylsäure durch Einleiten von gasförmigem Ammoniak oder durch deren Umsetzung mit Alkalialkoholaten, auch Alkalialkoholaten von Alkoholen der Formel I oder durch Umsetzung mit einem wasserfreien organischen Amin im Suspensionsmedium der Formel I durchgeführt.

Die erfindungsgemäß hergestellten Suspensionen werden als Verdickungsmittel verwendet.

## Vorteile der Erfindung

Mit dem erfindungsgemäßen Verfahren lassen sich Polymersuspensionen, die Polymerisate auf (Meth)-acrylsäure-Basis enthalten, und die insbesondere als Verdickungsmittel wirksam sind, gegenüber dem relevanten Stand der Technik, in einem einfachen, einstufigen Vorgehen erhalten. Überraschenderweise werden Suspensionen mit hoher Lagerstabilität - bisher geprüft bis zu 6 Monaten - erhalten, und die einen wesentlich höheren Trockengehalt als die Suspensionen nach EP 0 097 808 - Faktor 2 bis 3 - aufweisen. Die nach dem erfindungsgemäßen Verfahren erhaltenen Polymerisat-Suspensionen zeigen bei ihrer Anwendung sehr gute Eigen- und Fremd-Verdickung. Die Oligoalkylenglykolverbindungen I, die erfindungsgemäß als kontinuierliche Phase im neuen Herstellungsverfahren eingesetzt werden, weisen mit $\geqq$ 120 Grad C einen hohen Flammpunkt (bestimmt nach DIN 51 758) auf. Sie sind infolge ihrer sehr geringen Toxizität und guten biologischen Abbaubarkeit umweltfreundlich und ökologisch unbedenklich.

## Durchführung der Erfindung

### Aufbau des Polymerisats

Die Komponente a ist vorzugsweise ein Alkali- oder Ammonium- oder ein organisches Aminsalz der Acrylsäure, jedoch kann es auch ein derartiges Salz der Methacrylsäure oder eines Gemisches der beiden Säuren sein. Die Alkalisalze leiten sich im allgemeinen von Natrium, Kalium oder Lithium, vorzugsweise von Natrium ab. Als organische Amine, die zur Salzbildung eingesetzt werden können, seien beispielhaft Diethylamin, Tributylamin, 2-Aminoethanol, 2-Dimethylaminoethanol oder Triethanolamin genannt. Die Ammoniumsalze sind bevorzugt. Ein Teil der Salzkomponente, jedoch vorzugsweise nicht mehr als die Hälfte, kann durch freie Acryl- oder Methacrylsäure ersetzt sein.

Als vernetzende Komponente b kommen z.B. Diacrylate und Dimethacrylate von Glykolen, wie Alkylenglykoldimethacrylat oder Divinylbenzol oder Divinylester oder Diallylester zweibasischer Carbonsäuren, wie Diallylphthalat, in Betracht. Bevorzugt werden Verbindungen mit zwei Doppelbindungen von unterschiedlicher Reaktivität bei der radikalischen Polymerisation, wie insbesondere Allyl(meth)acrylat oder 2-Vinyloxyethylmethacrylat oder auch N-Allyl(meth)acrylamid eingesetzt.

Ein bewährtes Polymerisat ist aus 98 bis 99,9 Gew.-% Ammonium(meth)acrylat, insbesondere aus Ammoniumacrylat und 0,1 bis 2 Gew.-% Vernetzungsmittel, insbesondere mit Allyl(meth)acrylat und/oder N-Allyl(meth)acrylamid als Monomeren aufgebaut.

Vorzugsweise ist das Polymerisat allein aus den Komponenten a und b aufgebaut, jedoch können weitere Komponenten c am Aufbau beteiligt sind, sofern sie die Löslichkeit bzw. Quellbarkeit in Wasser und das Verdickungsverhalten nicht beeinträchtigen. Daher müssen die eventuellen Comonomeren c wenigstens zum überwiegenden Teil stark hydrophil oder sogar wasserlöslich sein. Beispiele solcher Comonomeren sind gegebenenfalls durch niedere Alkylreste subsitutierte Acryl- und Methacrylamide und niedere Hydroxyalkylester von ungesättigten polymerisierbaren Carbonsäuren, wie Hydroxyethyl- oder Hydroxypropyl(meth)-acrylat oder (Meth)acrylate von Alkylpolyethylenglykolen. Sie sollen keine ionischen oder ionisierbaren

Gruppen, insbesondere keine Amino- oder Ammoniumgruppen tragen. Comonomere, die nicht diese Voraussetzungen erfüllen, wie beispielsweise (Meth)acrylsäurealkylester mit $C_1$- bis $C_{26}$-Alkylgruppen, sollen höchstens in geringfügigen, 5 bis 10 Gew.-% nicht überschreitenden Anteilen am Aufbau der Polymerisate beteiligt sein.

Die Herstellung des Polymerisats
erfolgt durch Polymerisation in einem im wesentlichen wasserfreien Medium als kontinuierlicher Phase. Der Wassergehalt darf höchstens 0,5 Gew.-% (bezogen auf das Medium) betragen, weil sonst die Gefahr der Verklumpung des Polymerisats besteht. Als Polymerisat-Suspensionsmedien werden Oligoalkylenglykolverbindungen der Formel I, die einen Flammpunkt ≧ 120 Grad C (nach DIN 51 758) aufweisen, wie Diethylenglykol, Triethylenglykol, Tetraethylenglykol, Triethylenglykolmonoethylether, Dipropylenglykol, Tripropylenglykol, sowie die Monomethyl- oder Monoethylether der Di- und Tripropylenglykole erfindungsgemäß eingesetzt. Sie enthalten maximal 0,1 Gew.-% Wasser (Ullmann, Encyklopädie der technischen Chemie, 4. Auflage, Band 8,Seiten 200 bis 205 und Band 19, Seiten 426 bis 431). Tripropylenglykol ist das bevorzugte Medium. Andere Verbindungen der Formel I sind neben oder anstelle von Tripropylenglykol verwendbar. Als Suspensionsmedium sind Gemische von Verbindungen einsetzbar, die auch noch in ganz untergeordneten Mengen nieder- und/oder höhermolekulare Homologe der Oligoalkylenglykolverbindungen enthalten können.

Da die Salze der (Meth)Acrylsäure im allgemeinen schwer erhältlich sind, löst man in der Regel die freie Säure und den Vernetzer im oligoglykolischen Medium und führt die Säure dann ganz oder teilweise in das Salz über. Um dabei die Bildung störender Mengen Wasser zu vermeiden, neutralisiert man durch Einleiten von gasförmigem Ammoniak, durch Zugabe des wasserfreien Amins oder durch Zugabe von Alkalialkoholaten, insbesondere den glykolischen Alkalialkoholaten oder von Alkalimetallen. Die Menge der salzbildenden basischen Komponente richtet sich nach dem gewünschten Neutralisationsgrad.

Dem System (Meth)acrylsäuresalz-kontinuierliche Phase fügt man gegebenenfalls die weiteren Monomerkomponenten sowie einen radikalischen Polymerisationsinitiator, z.B. ein organisches Peroxid oder eine Azoverbindung zu, und bringt das System unter Rühren auf die Polymerisationstemperatur oder läßt es allmählich in ein auf Polymerisationstemperatur gehaltenes Rührgefäß einlaufen. Die Dispergier- und Verteilungsmittel sind im allgemeinen entbehrlich. Im Laufe der Polymerisation fällt das Polymerisat in Form sehr feiner, mehr oder weniger perlförmiger Suspensions-Partikel an.

Anwendung

Die Polymersuspension ist sehr gut lagerfähig und zum Gebrauch durch Einrühren in Wasser schnell und vollständig löslich.

Die erfindungsgemäße, sicher dosierbare Anwendungsform dient vor allem als Verdickungsmittel zum Verdicken von neutralen oder alkalischen wäßrigen Systemen, z.B. von Dispersionen für Anstrichfarben, Druckfarben oder Textilhilfsmitteln oder kosmetischen Zubereitungen.

Je nach der gewünschten Verdickung wird das Verdickungsmittel in Mengen von 0,1 bis 5 Gew.-% , vorzugsweise 0,2 bis 2 Gew.-%, berechnet als reines Polymerisat, eingesetzt. Die volle Verdickungswirkung wird im allgemeinen innerhalb weniger Minuten nach dem Einrühren in Wasser erreicht.
Durch Einsatz des erfindungsgemäßen Verdickungsmittels lassen sich Wasser oder wäßrige Systeme ohne weitere Zusätze verdicken, wobei bei einem Polymerisatgehalt von 0,25 Gew.-% eine Viskosität über 1 000, vorzugsweise über 3 000 mPas und bei einem Polymerisatgehalt von 1 Gew.-% eine Viskosität über 20 000, vorzugsweise über 100 000 mPas erreicht wird.

BEISPIELE

A. Herstellung der Verdickungsmittel

Beispiel 1

In einem 1 l-Wittschen-Topf, ausgestattet mit Blattrührer, Thermometer, Kühler und Einleitrohr werden 650 g Tripropylenglykol, 130 g Acrylsäure und 1,95 g Methacrylsäureallylester vorgelegt und unter Rühren und Kühlen Ammoniakgas bis zum Überschuß eingeleitet; (überschüssiges Gas entweicht in das mit 2 %iger Schwefelsäure gefüllte Sicherheitsgefäß). Nach vollständiger Ammoniakeinleitung wird die leicht viskose Lösung mit 0,15 g tert.-Butylperpivalat versetzt und auf 80 Grad C aufgeheizt. Dabei fällt eine viskose, leicht gelbliche Suspension an. Zwei Stunden nach Erreichen der Reaktionstemperatur werden 1,0 g tert.-Butylperpivalat und eine Stunde später nochmals dieses in gleicher Menge zugegeben. Anschließend

wird 3 Stunden bei 80 Grad C gerührt und dann abgekühlt.
Aussehen: homogene beige Suspension
Festkörpergehalt: ca. 17 %
aktuelle Viskosität: 3000 - 20 000 mPa•s.
Lagerstabilität:
nach ca. 2 Wochen bildet sich ein sehr geringer Lösungsmittelüberstand, der über Monate nicht zunimmt; Produkt ist sehr leicht homogenisierbar.

Beispiel 2

In einem 1 l-Wittschen-Topf, ausgestattet mit Blattrührer, Thermometer, Kühler und Einleitrohr werden 500 g Tetraethylenglykol, 101 g Acrylsäure und 1,5 g Methacrylsäureallylester vorgelegt und unter Rühren und Kühlen Ammoniakgas bis zum Überschuß eingeleitet; (überschüssiges Gas entweicht in das mit 2 %iger Schwefelsäure gefüllte Sicherheitsgefäß). Nach vollständiger Ammoniakeinleitung wird die gelbe, leicht viskose Lösung mit 0,09 g tert.-Butylperpivalat versetzt und auf 80 Grad C aufgeheizt. Dabei fällt eine viskose, leicht gelbliche Suspension an. Zwei Stunden nach Erreichen der Reaktionstemperatur werden 0,62 g tert.-Butylperpivalat und eine Stunde später nochmals dieses in gleicher Menge zugegeben. Anschließend wird 3 Stunden bei 80 Grad C gerührt und dann abgekühlt.
Aussehen: homogene beige Suspension
Festkörpergehalt: ca. 20 %
aktuelle Viskosität: ca. 5000 mPa•s
Lagerstabilität:
nach ca. 1 Woche bildet sich ein sehr geringer Überstand an Lösungsmittel.

B) Verdickungswirkung

a) Eigenverdickung:
Viskosität einer 0,25 %igen wäßrigen Lösung bezogen auf Polymer von:
Beispiel 1: 4 000 - 12 000 mPa·s
Beispiel 2: 25 mPa.s
b) Fremdverdickung der erfindungsgemäßen Verdicker im Vergleich zu üblichem Verdicker auf Methacrylsäure-Basis (Rohagit ® SD 15, 7,5 % Polymergehalt)

| Verdicker Beispiel 1 (g) | 100 g zu verdickende Dispersion | relativer Bedarf an Polymersubst. vgl. zu ROHAGIT® SD 15 | Viskosität (nach 1 Stunde) [mPa.s] |
|---|---|---|---|
| 1,25 | PLEXTOL® BV 411 | 48 | 60 000 |
| 6 g ROHAGIT® SD 15 | PLEXTOL® BV 411 | 100 | 58 000 |
| 0,63 | PLEXTOL® DV 475 | 49 | 38 000 |
| 3 g ROHAGIT® SD 15 | PLEXTOL® DV 475 | 100 | 50 000 |
| 1,3 | LIPOLAN® TV 581 | 50 | 42 000 |
| 6 g ROHAGIT® SD 15 | LIPOLAN® TV 581 | 100 | 39 000 |

| Verdicker Beispiel 2 (g) | 100 g zu verdickende Dispersion | Viskosität (nach 1 Stunde) [mPa.s] |
|---|---|---|
| 1,0 | PLEXTOL® B 500 | 36 000 |
| 1,0 | PLEX® 4998 D | 68 000 |

PLEXTOL, ROHAGIT, PLEX: Bezeichnungen für Verkaufs- bzw. Versuchsprodukte der Fa. RÖHM GmbH, Darmstadt;
LIPOLAN: Bezeichnung für Verkaufsprodukt der Fa. HÜLS AG, Marl

**Patentansprüche**

**1.** Verfahren zur Herstellung einer wasserfreien Suspension eines wasserlöslichen Polymeren auf Basis eines schwach vernetzten Polymerisats der (Meth)acrylsäure,
dadurch gekennzeichnet,
daß ein Polymerisat in Suspensionsform, an dessen Aufbau
a) 30 bis 99,99 Gew.-% eines Alkali-, Ammonium- und/oder Aminsalzes der Acryl- und/oder Methacrylsäure, die bis zur Hälfte des Gewichtes dieser Komponente durch Einheiten freier (Meth)-acrylsäure ersetzt sein können,
b) 0,01 bis 5, vorzugsweise 0,5 bis 2 Gew.-% Einheiten eines vernetzenden Monomeren mit mindestens zwei polymerisierbaren Doppelbindungen und
c) 0 bis 69,99 Gew.-% eines oder mehrerer weiter überwiegend stark hydrophiler, nichtionischer Comonomerer
beteiligt sind,
durch Polymerisation in Oligoalkylenoxidverbindungen der Formel I

$$H-(-O-\underset{|}{\overset{R}{C}}H-CH_2-)_n\ OR_1 \qquad I$$

mit
R = H, $CH_3$
$R_1$ = H, $CH_3$, $C_2H_5$
n = 2, 3, 4
hergestellt wird.

**2.** Verfahren zur Herstellung einer wasserfreien Suspension eines wasserlöslichen Polymeren nach Anspruch 1, dadurch gekennzeichnet, daß diese Suspension mit einem Polymerisatgehalt größer 12 Gew.-%, insbesondere größer 13 Gew.-%, vor allem einem solchen mit 15 bis 30 Gew.-%, hergestellt wird.

**3.** Verfahren zur Herstellung einer wasserfreien Suspension eines wasserlöslichen Polymeren nach den Ansprüchen 1 und 2, dadurch gekennzeichnet, daß das Polymerisat aus 98 bis 99,9 Gew.-% Ammonium(meth)acrylat und 0,1 bis 2 Gew.-% Vernetzungsmittel als Monomeren gebildet wird.

**4.** Verfahren zur Herstellung einer wasserfreien Suspension eines wasserlöslichen Polymeren nach den Ansprüchen 1 bis 3, dadurch gekennzeichnet, daß das Polymerisat aus 98 bis 99,9 Gew.-% Ammoniumacrylat und 0,1 bis 2 Gew.-% Allyl(meth)acrylat oder N-Allyl(meth)acrylamid als Monomeren gebildet wird.

**5.** Verwendung einer polymerhaltigen Suspension hergestellt nach einem der Ansprüche 1 bis 4 als Verdickungsmittel für Wasser oder wäßrige Systeme.

Europäisches Patentamt

# EUROPÄISCHER RECHERCHENBERICHT

Nummer der Anmeldung

EP 92 12 1135

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 420 586 (BHATTACHARYYA ET AL.)<br>--- | 1-5 | C08F220/06<br>C08F2/14 |
| A | DE-A-3 221 284 (RÖHM)<br>--- | 1-5 | |
| D,A | EP-A-0 097 808 (RÖHM)<br>--- | 1-5 | |
| D,A | US-A-3 849 361 (M. L. ZWEIGLE)<br>& DE-A-2 451 599<br>----- | 1-5 | |

RECHERCHIERTE SACHGEBIETE (Int. Cl.5)

C08F

Der vorliegende Recherchenbericht wurde für alle Patentansprüche erstellt

| Recherchenort | Abschlußdatum der Recherche | Prüfer |
|---|---|---|
| DEN HAAG | 01 MAERZ 1993 | ANDRIOLLO G.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument